# EUROPÄISCHE PATENTSCHRIFT

(11) **EP 3 219 879 B1**
(45) Veröffentlichungstag und Bekanntmachung des Hinweises auf die Patenterteilung: **26.08.2020**
(21) Anmeldenummer: 17161154.4
(22) Anmeldetag: 15.03.2017
(51) Int. Cl.: E04H 12/34, E02D 27/42, F03D 13/20

(54) **VERFAHREN ZUM AUFSTELLEN EINES WINDENERGIEANLAGEN-TURMS SOWIE ENTSPRECHENDE WINDENERGIEANLAGE**
METHOD FOR SETTING UP A WIND TURBINE TOWER AND CORRESPONDING WIND TURBINE
PROCÉDÉ D'INSTALLATION D'UNE TOUR D'ÉOLIENNE ET ÉOLIENNE CORRESPONDANTE

(30) Priorität: 17.03.2016 DE 102016003265
(43) Veröffentlichungstag der Anmeldung: 20.09.2017
(73) Patentinhaber: Senvion GmbH, 22297 Hamburg (DE)
(72) Erfinder: Frost, Bernd, 25551 Winseldorf (DE)
(74) Vertreter: Glawe, Delfs, Moll

(56) Entgegenhaltungen:
- WO-A1-2005/095717
- WO-A2-2007/130667
- GB-A- 606 545
- US-A1- 2015 376 859

## Beschreibung

Die Erfindung betrifft ein Verfahren zum Aufstellen eines Turms einer Windenergieanlage auf einem Fundamentkörper, wobei der Turm mittels Ankerstäben an dem Fundamentkörper befestigt wird. Die Erfindung erstreckt sich ferner auf eine entsprechend mittels Ankerstäben befestigte Windenergieanlage.

Windenergieanlagen stellen nicht nur durch ihre große Turmhöhe, sondern auch durch die wegen der schweren Aufbauten in der Gondel bedingten hohen Kopflastigkeit und den erheblichen angreifenden aerodynamischen Lasten eine besondere Herausforderung an die sichere Befestigung im Fundament. Typischerweise erfolgt die Befestigung durch Ankerstäbe, welche aus einem als Fundament dienenden Betonblock nach oben herausragen. An den Ankerstäben ist der Turm mit einem an seinem unteren Ende angeordneten Flansch befestigt. Eine Schwierigkeit besteht darin, die hohen Toleranzanforderungen beim Einbetonieren der Ankerstangen sicherzustellen, damit die Aufnahme des Flansches sicher gewährleistet ist.

Hierzu ist es bekannt, eine Schablone vorzusehen, die eine Form entsprechend dem Flansch am unteren Ende des Turms der Windenergieanlage aufweist (WO 96/16232). Bei der Herstellung des Betonfundaments taucht die Schablone teilweise in die Oberseite des Betonfundaments ein. Nach dem Aushärten des Betons wird sie entfernt, wodurch eine zur Aufnahme des Flanschs passende, ebene Ausnehmung in der Oberseite des Betonfundaments bereitgestellt wird. Auf dieser kann der Turmflansch dann aufgestellt und in geeigneter Weise befestigt werden. US 2015/0376859 A1 zeigt ein Verfahren zum Aufstellen eines Turms auf einen Fundamentkörper gemäß der Präambel des Anspruchs 1. Auch WO 2005/095717 A1 und WO2007/130667 A2 zeigen weitere Verfahren zum Aufstellen von Türmen. GB 606645 zeigt ein Verfahren zur Korrektur der Ausrichtung von Ankerbolzen in einem Fundament.

Als Befestigungsmittel dienen meist Ankerstangen. Sie werden mit ihrem unteren Bereich in dem Betonfundament verankert, und mit ihrem oberen Ende mit dem Flansch des Turms verschraubt. Hierzu werden Schablonen verwendet, deren Lochbild mit dem des Turmflansches übereinstimmt, um so die Ankerstangen in passender Weise in dem Betonfundament anordnen zu können. In der Praxis hat sich gezeigt, dass insbesondere bei größeren Turmdurchmessern die Herstellung und der Transport der Schablonen sehr aufwendig sind. Eine weitere Problematik besteht darin, dass geringe Toleranzen zu realisieren sind. Zwar können die Schablonen grundsätzlich wieder verwendet werden, jedoch bedingt dies zusätzlichen Aufwand durch Reinigung, Wartung und Rücktransport der Schablonen nach ihrem Einsatz zu einem Zentrallager.

Neben den hohen Herstellungskosten und dem hohen Aufwand für anschließende Wartung, Reinigung und Rücktransport zur Weiterverwendung der Schablonen tritt noch ein gravierender Nachteil hinzu: so kann es bei Überschreitung von Toleranzen bei der Herstellung der Schablonen dazu kommen, dass der Flansch des Turms nicht auf die gemäß der Schablone gesetzten Ankerstangen passt. Dies hätte die sehr negative Konsequenz, dass das gesamte Betonfundament unter Zeit- und Kostenverlust zurückzubauen wäre.

Der Erfindung liegt die Aufgabe zu Grunde, ein verbessertes Verfahren sowie Windenergieanlage anzugeben, womit die oben genannten Nachteile vermieden und insbesondere die Toleranzempfindlichkeit verringert werden.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Aufstellen eines Windenergieanlagen-Turms auf einem Fundamentkörper, wobei der Windenergieanlagen-Turm mittels Ankerstäben an dem Fundamentkörper befestigt wird, ist erfindungsgemäß vorgesehen ein Anordnen mehrerer Köcher an einem Fundament derart, dass die Köcher vertikal ausgerichtet werden, wobei die Köcher Überweite in Bezug auf die Ankerstäbe aufweisen; Positionieren der Köcher an der Oberseite des zu schaffenden Fundamentkörpers derart, dass sie unterhalb vorgesehener Positionen der Ankerstäbe angeordnet sind; Herstellen, insbesondere Betonieren, des Fundamentkörpers, wobei der Fundamentkörper die Köcher seitlich umschließt und das Innere der Köcher frei bleibt; Befestigen von Ankerstäben mit ihrem einem Ende in den Köchern oder an Aufnahmen eines Schraublochrings für ein unteres Ende des Windenergieanlagen-Turms; Positionieren des Schraublochrings über dem Fundamentkörper derart, dass die Köcher, die Ankerstäbe und die Aufnahmen des Schraublochrings fluchten; Ablassen des Schraublochrings auf den Fundamentkörper, wobei die Ankerstäbe mit ihrem anderen Ende in die Aufnahmen des Schraublochrings oder in die Köcher eintauchen; Nivellieren des Schraublochrings, Vergießen des Spalts zwischen Ankerstäben und Innenwandung der Köcher mit einer Vergussmasse, und Montage des unteren Endes des Turms.
Nachfolgend seien einige verwendete Begriffe erläutert:
Unter einem Köcher wird ein behälterartiges Gebilde verstanden, welches eine umschließende Seitenwand besitzt und nach oben offen ist. Nach unten ist er ebenfalls geschlossen, sei es durch ein eigenes Bodenelement oder durch Aufstehen auf dem Untergrund.

Unter einer profilierten Wandung wird eine Seitenwand des Köchers verstanden, die derart profiliert ist, dass sie schubfest mit umgebendem Material, insbesondere Beton, verzahnt.

Unter Überweite wird verstanden, dass die Köcher einen wesentlich größeren Querschnitt aufweisen als für den Eintritt des bzw. der Ankerstäbe erforderlich, sodass zwischen Ankerstab und innenseitiger Wandung des Köchers ein Zwischenraum (Ringspalt) gebildet ist.

Unter paarweise werden insbesondere Gruppen aus zwei benachbarten Ankerstäben verstanden. Es soll aber nicht ausgeschlossen sein, dass die Gruppen jeweils auch drei oder mehr Ankerstäbe umfassen.

Die Erfindung hat erkannt, dass mit dem Bereitstellen von Köchern in dem Fundamentkörper, in die später die Ankerstangen entweder einzeln oder paarweise eingelassen werden, eine beträchtliche Vereinfachung und Verbesserung des Montageverfahrens erreicht werden kann. Es werden erfindungsgemäß in zwei gesonderten Arbeitsfolgen zwei Subeinheiten hergestellt, die in einem dritten Schritt verbunden werden. Die erste Arbeitsfolge besteht in dem Schaffen des Fundamentkörpers mit den eingelassenen Köchern als erste Subeinheit, wobei im Wesentlichen kein Beton in den Innenraum der Köcher einfließt und die Köcher somit zur Aufnahme der Ankerstäbe frei sind. Die zweite Arbeitsfolge besteht in dem Schaffen eines Verbunds aus dem Schraublochring (in der Regel ausgebildet als Flansch am unteren Ende des Turms) und den Ankerstäben als zweite Subeinheit. Anschließend wird die zweite Subeinheit ausgerichtet, so dass die Ankerstäbe mit den Köchern und den Aufnahmen im Schraublochring fluchten, und dann wird die zweite Subeinheit auf die erste Subeinheit gesetzt, wobei die Ankerstäbe in die Köcher bzw. Aufnahmen eintauchen, und schließlich werden die Ankerstäbe in den Köchern durch Vergießen mit Vergussmasse befestigt. Da die Köcher Überweite aufweisen, ist genügend Spiel vorhanden, sodass die Ankerstangen auch bei toleranzbedingten Abweichungen immer sicher in die Köcher und den Schraublochring passen. Es entsteht so ein Verbund zwischen dem Fundamentkörper an sich und der Vergussmasse innerhalb des Köchers, dessen Wandung vorzugsweise zur Steigerung der Befestigungssicherheit eine profilierte Oberfläche aufweist. Damit wird das im Stand der Technik vorhandene erhebliche Risiko, dass der Turm aufgrund von Toleranzabweichungen nicht auf die Ankerstangen passt, wirksam vermieden.

Eine gesonderte Schablone ist bei der Erfindung somit nicht mehr erforderlich, da der Schraublochring des Turms selbst praktisch als Schablone verwendet wird. Indem die Notwendigkeit der Schablone entfällt, fallen auch die mit der Verwendung der gesonderten Schablone zusammenhängenden Zusatzarbeiten weg, wie das Reinigen, Warten und Rücktransportieren der Schablone.

Damit verknüpft die Erfindung eine höhere Robustheit gegenüber Toleranzabweichungen mit geringerem Aufwand. Das ist im Stand der Technik ohne Beispiel.

Zweckmäßigerweise ist jeweils ein Köcher zur paarweisen Aufnahme von Ankerstangen ausgebildet. Damit können zwei jeweils dicht beieinander liegende Ankerstangen in einem gemeinsamen Köcher aufgenommen werden. Damit verringert sich nicht nur der Materialaufwand aufgrund der geringeren Anzahl der Köcher, sondern auch der Verfüllungsaufwand bei dem Vergießen mit Vergussmasse verringert sich. Insbesondere ist es von Vorteil, wenn bei einer doppelreihigen Anordnung von Ankerstäben an dem Schraublochring jeweils benachbarte innere und äußere Ankerstäbe gemeinsam paarweise in einem Köcher aufgenommen sind. Es soll aber nicht ausgeschlossen sein, dass jeweils ein eigener Köcher für einen Ankerstab vorgesehen ist.

Vorzugsweise werden die Köcher gegen Aufschwimmen gesichert. Dies kann in zweckmäßiger Weise durch Vorsehen eines Ballastgewichts erfolgen. Hierbei kommt sowohl der eigentliche Materialkörper des Köchers als Ballast infrage, aber auch eine vorab vorgenommene Teilbefüllung des Köchers in seinem unteren Bereich mit Beton und/oder Vergussmasse. Es kann aber alternativ oder zusätzlich auch vorgesehen sein, die Köcher in den Untergrund des Fundaments zu befestigen, sei es in dem Untergrund selbst oder eine zur Amelioration auf dem Untergrund aufgebrachten Sauberkeitsschicht.

Vorzugsweise wird als Vergussmasse ein Material verwendet, das eine höhere Festigkeit aufweist als das Material des Fundamentkörpers. Besonders zweckmäßig ist die Verwendung von hochwertigem, hochfestem Beton für die Vergussmasse. Da zur Befüllung der Köcher mit Vergussmasse nur eine verhältnismäßig geringe Menge an Vergussmasse benötigt wird (verglichen mit der Gesamtmenge für den Fundamentkörper), wird somit nur wenig von dem hochwertigen, hochfesten Material benötigt.

Zweckmäßigerweise weisen die Köcher eine Weite auf, die wenigstens das Zehnfache, weiter vorzugsweise wenigstens das Zwanzigfache des Durchmessers der Ankerstäbe beträgt. Zweckmäßigerweise ist die Weite der Köcher in Umfangsrichtung des Schraublochrings so bemessen, dass sie etwa der Hälfte bis vier Fünftel des Abstands zwischen zwei in Umfangsrichtung benachbarten Schraublöchern am Schraublochring entspricht. Damit wird erreicht, dass die Köcher hinreichend groß sind, um einen ausreichenden Toleranzausgleich und eine zur sicheren Befestigung ausreichende Aufnahme von Vergussmasse zu ermöglichen. Andererseits sind sie noch klein genug, um problemlos eine Durchflechtung des Fundamentkörpers mit Bewehrungsmaterial zwischen den Köchern zu ermöglichen.

Zweckmäßigerweise sind die Ankerstäbe mit Eingießplatten versehen, die vorzugsweise in einem unteren Bereich der Ankerstäbe angeordnet sind. Hiermit wird eine zusätzlich erhöhte Verankerungssicherheit der Ankerstäbe in den Köchern erreicht. Dabei ist die Weite des Köchers vorzugsweise so auf die Eingießplatte abgestimmt, dass der freie Querschnitt des Köchers mindestens doppelt so groß ist wie die Fläche der Eingießplatte. Es wird so eine hohe Verankerungssicherheit mit ausreichend großem Toleranzausgleich verknüpft.

Vorzugsweise wird die Dimensionierung der Köcher in Radialrichtung mindestens so groß bemessen, dass bei aufgesetztem Schraublochring ein Teil der Köcher nach oben offen bleibt. Damit wird nach dem Aufsetzen des Schraublochrings ein einfacher Zugang zu dem Innenraum des Köchers zum Befüllen mit Vergussmasse sichergestellt.

Zweckmäßigerweise sind mehrere Köcher mittels einer Verbindung miteinander verbunden. So können durch die Verbindung Einheiten gebildet sein, die mehrere (z. b. fünf, zehn oder mehr) Köcher umfassen. Das vereinfacht die Handhabung. Vorzugsweise ist die Verbindung als Rinne ausgeführt, um so ein gemeinsames Vergießen zu ermöglichen. Auf diese Weise können mehrere Köcher gleichzeitig mit Vergussmasse vergossen werden. Ferner wird damit eine Vereinfachung des Zugangs zu den Köchern erreicht.

Es kann vorgesehen werden, den Schraublochring in mehrere bogenförmige Segmente zu unterteilen. Damit wird die Handhabung vereinfacht, da die einzelnen Segmente kleiner und leichter sind. Zur korrekten Positionierung der Segmente derart, dass sie zusammengesetzt wieder den Schraublochring bilden, sind vorzugsweise Radialstangen vorgesehen, die von einem Zentrum radial zu den Segmenten führen und diese so korrekt als Kreisbogenstück positionieren. Zur Verbindung benachbarter Segmente sind zweckmäßigerweise segmentübergreifende Ausrichtplatten vorgesehen. Damit kann ein korrekt ausgerichteter und in sich stabiler Verbund zur Formung eines Schraublochrings gebildet werden.

Vorzugsweise wird als Schraublochring der Flansch eines unteren Turmrings der Windenergieanlage verwendet. So kann auf unmittelbare Weise eine Befestigung des untersten Rings des Turms erfolgen. Es kann aber auch vorgesehen sein, dass der Schraublochring in mehrere Segmente geteilt ist, wobei die Segmente einzeln nacheinander auf den Fundamentkörper gesetzt werden und danach gemeinsam mittels der Ankerstäbe befestigt werden. Dies ermöglicht es insbesondere, den unteren Turmring segmentweise auszuführen, was insbesondere bei Türmen mit sehr großem Durchmesser einen erheblichen Vorteil darstellt. Es soll aber nicht ausgeschlossen sein, dass der Schraublochring als Schablone für den Flansch am unteren Ende des Turms fungiert.

Die Erfindung umfasst ferner eine Windenergieanlage mit einem Turm, der an seinem unteren Ende einen Flansch zur Befestigung aufweist, einem Fundament, das einen Fundamentkörper umfasst, einer Mehrzahl von Ankerstäben, die in Aufnahmen des Flansches gehaltert sind und mit ihrem unteren Bereich in dem Fundamentkörper verankert sind, wobei der Turm mit seinem Flansch auf dem Fundamentkörper aufsteht, wobei erfindungsgemäß der Fundamentkörper weiter eine Mehrzahl von Köchern umfasst, die unterhalb des Flansches angeordnet sind und in die die Ankerstäbe eingeschoben sind, wobei in den Köchern eine Vergussmasse angeordnet ist, die einen Spalt zwischen Ankerstab und einer Seitenwandung der Köcher verfüllt.

Zur näheren Beschreibung wird auf vorstehende Ausführungen verwiesen.

Die Erfindung wird nachfolgend unter Bezugnahme auf die beigefügte Zeichnung anhand eines Ausführungsbeispiels näher erläutert. Es zeigen:
- Fig. 1.: einen Querschnitt durch eine Ausschachtung für ein Fundament einer Windenergieanlage;
- Fig. 2.: eine Aufsicht auf einen Fundamentkörper mit eingelassenen Köchern;
- Fig. 3.: einen Querschnitt entlang der Linie III-III aus Fig. 2;
- Fig. 4.: einen Querschnitt entlang der Linie IV-IV aus Fig. 2;
- Fig. 5.: eine Darstellung basierend auf Fig. 3 nach dem Einsetzen von Ankerstäben;
- Fig. 6.: eine Detailansicht im Querschnitt nach Einsetzen der Ankerstäbe und nach Verfüllen mit Vergussmasse;
- Fig. 7.: eine Schemadarstellung einer Windenergieanlage auf einem Fundament;
- Fig. 8.: Darstellungen zum Montieren eines unteren Turmrings;
- Fig. 9.: Darstellungen zur segmentweisen Montage des unteren Turmrings;
- Fig. 10.: eine Aufsicht auf eine in Bogensegmente geteilten Schablone;
- Fig. 11.: Darstellungen zur segmentweisen Montage der geteilten Schablone;
- Fig. 12.: Einrichtungen zum Ausrichten der Bogensegmente der Schablone gemäß Fig. 10; und
- Fig. 13.: eine Detaildarstellung der Köcher in Aufsicht.

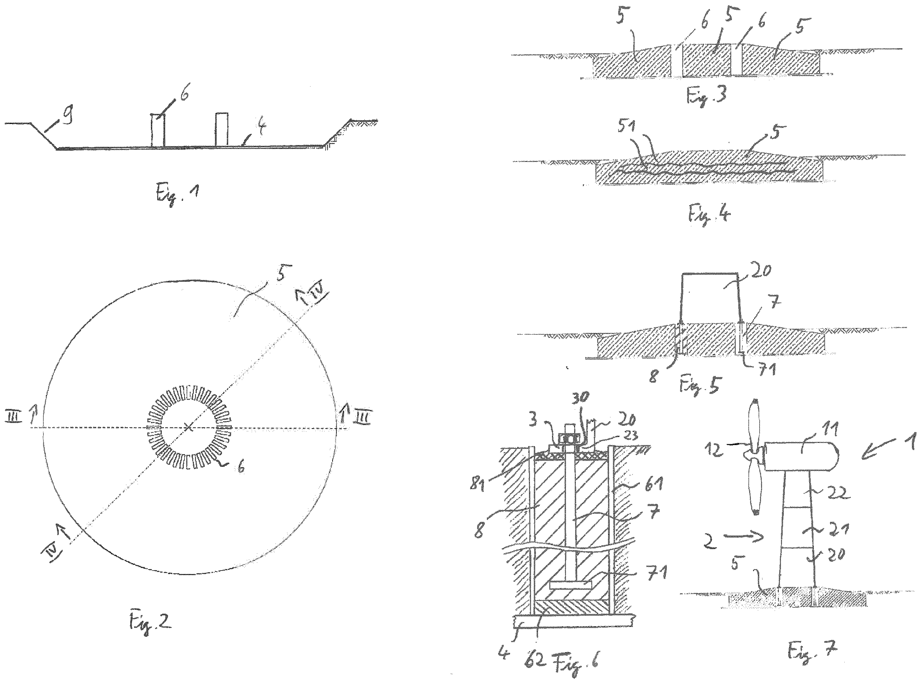

Für die Erläuterung eines Ausführungsbeispiels der Erfindung wird eine Windenergieanlage 1 verwendet, die einen Turm 2 umfasst, an dessen oberen Ende eine Gondel 11 mit einem Windrotor 12 an einer Stirnseite der Gondel 11 vorgesehen ist (siehe Fig. 7). Der Turm 2 ist aus mehreren Teilen aufgebaut, einem unteren Turmring 20 sowie weiteren Turmringen 21, 22.
Das Herstellen des Fundaments und dessen Aufbau werden nachfolgend unter Bezugnahme auf die Figuren erläutert. Für das Fundament wird eine Ausschachtung 9 an der vorgesehenen Stelle im Untergrund ausgehoben. Am Grund der Ausschachtung 9 wird zur Schaffung einer ebenen Ausgangsfläche eine so genannte Sauberkeitsschicht 4 betoniert. Darauf werden eine Mehrzahl von Köchern 6 kreisförmig angeordnet. Die Köcher 6 werden vertikal derart ausgerichtet, dass ihre offene Seite nach oben weist. Mit ihrer Unterseite sind die Köcher 6 vorzugsweise in die Sauberkeitsschicht 4 eingelassen worden, bevor diese vollständig aushärtete. Damit sind sowohl die Köcher 6 fest positioniert wie auch nach unten hin dicht abgeschlossen. Die Seitenwandung 61 der Köcher 6 ist profiliert und im Übrigen betondicht ausgeführt. Unter betondicht wird hierbei verstanden, dass beim Gießen des eigentlichen Fundamentkörpers im Außenraum um die Köcher 6 im Wesentlichen kein Beton in den Innenraum der Köcher 6 eindringen kann. Die Köcher 6 sind hierbei so positioniert, dass sie unterhalb von Schraublöchern eines Schraubrings 3 so positioniert sind, wie es für die Befestigung des unteren Turmrings 20 der Windenergieanlage erforderlich ist. Um die Aufstellung der Köcher 6 entlang einer Kreisbahn zu gewährleisten, kann in an sich bekannter Weise auf einen Zirkel zurückgegriffen werden.

Es wird nun aus Bewehrungselementen 51 ein Bewehrungskorb (nicht dargestellt) für einen Fundamentkörper 5 hergestellt und in der Ausschachtung 9 montiert. Nachfolgend wird durch Eingießen von Beton der eigentliche Fundamentkörper 5 hergestellt. Durch die Köcher 6 entstehen dabei nach oben offene Hohlräume in dem Fundamentkörper 5. Aufgrund der gewählten Anordnung der Köcher 6 entspricht die Anordnung dieser Hohlräume der Anordnung von Ankerstangen 7 zur Befestigung des Turms 2 der Windenergieanlage 1. Eine Querschnittsdarstellung des Fundamentkörpers 5 mit Schnittführung durch die Köcher 6 ist in Fig. 3 dargestellt. Eine entsprechende Querschnittsdarstellung mit Schnittführung außerhalb der Köcher 6 ist in Fig. 4 dargestellt; hierbei sind auch die für den Bewehrungskorb verwendeten Bewehrungselemente 51 schematisiert abgebildet. Man erkennt, dass trotz des Vorhandenseins der Köcher 6 eine Durchdringung des Fundamentkörpers 5 mit Bewehrungselementen 51 erreicht werden kann. So kann auch insbesondere dadurch, dass die Köcher 6 voneinander beabstandet angeordnet sind (siehe Fig. 2) sichergestellt werden, dass die Bewehrungselemente 51 auch zwischen den Köchern 6 hindurch verlegt werden können.

In einer nächsten Arbeitsfolge werden die Ankerstäbe 7 in den Schraublochring 3, genauer gesagt in als Durchgangslöcher ausgeführte Aufnahmen 30 des Schraublochrings 3 eingesetzt. Der untere Turmring 20 mit dem Schraublochring an seinem unteren Ende wird dann angehoben (nicht dargestellt), wobei die am Schraublochring 3 montierten Ankerstangen 7 frei nach unten abragen. Die Ankerstangen 7 sind an ihrem unteren Ende mit optionalen Eingießplatten 71 versehen. Die Eingießplatten weisen in dem dargestellten Ausführungsbeispiel eine Größe von 35cm x 35cm auf; die Ankerstäbe 7 sind Gewindestangen des Typs M56.

Nach dem (zumindest teilweisen) Aushärten des Fundamentkörpers 5 wird der Schraublochring 3 des unteren Turmrings 20 mit den frei nach unten abragenden Ankerstangen 7 über den Fundamentkörper 5 gehoben und so positioniert, dass die Ankerstangen 7 sich über den ihnen jeweils zugeordneten Köchern 6 befinden. Im nächsten Schritt erfolgt dann ein Ablassen so weit, dass die Ankerstangen 7 mit den Eingießplatten 71 an ihrem unteren Ende von oben in die Köcher 6 eintauchen. Die Köcher 6 sind so groß bemessen, dass sie je Seite ca. 10 cm größer sind als die Ankerstangen 7 mit ihren Eingießplatten 71. Im dargestellten Ausführungsbeispiel weist der Köcher 6 eine Weite von 45cm x 60cm auf.

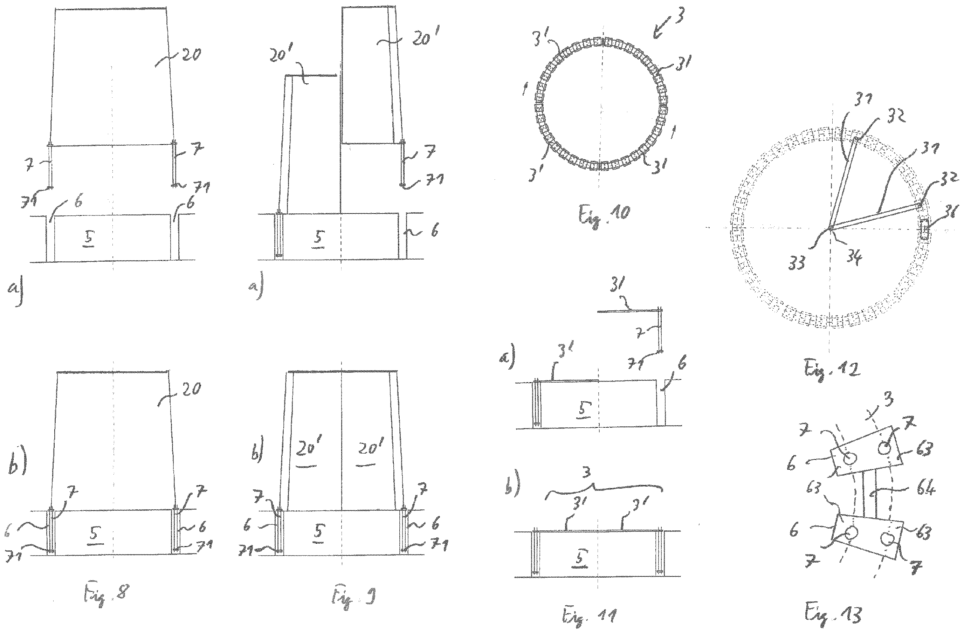

Das Ablassen erfolgt so weit, bis der Schraublochring 3 niveaugleich mit der Oberseite des Fundamentkörpers 5 ist (siehe Figur 8a, b).

In einem nächsten Schritt erfolgt in an sich bekannter Weise ein Nivellieren des unteren Turmrings 20. Hierbei wird durch geeignete Feinpositionierung eine exakt vertikale Ausrichtung des Turmrings 20 auf dem Fundamentkörper 5 erreicht. Ist dies erreicht, so kann die Position des Turmrings 20 mit den von ihm nach unten abragenden Ankerstangen 7 fixiert werden. Dies erfolgt in der Weise, dass Vergussmörtel 8 in die Köcher 6 eingegossen wird. Damit wird der Zwischenraum zwischen Ankerstangen 7 und der Innenfläche der Seitenwandung 61 der Köcher 6 gefüllt. Durch die profilierte Oberfläche der Köcher 6 entsteht ein lasttragender Verbund zwischen dem Fundamentkörper 5, dem Köcher 6 und dem Vergussmörtel 8 innerhalb der Köcher 6. Die Ankerstangen 7 mit ihren Eingießplatten 71 sind somit unverrückbar fest in den Köchern 6 und damit letztlich im Fundamentkörper 5 positioniert. Die Köcher 6 bleiben als sogenannte verlorene Schalung im Fundamentkörper 5.

In einem weiteren Schritt kann der hier als Flansch fungierende Schraublochring 3 in an sich bekannter Weise unterfüttert bzw. vergossen werden, beispielsweise mittels einer Unterfütterung 81 aus Vergussmörtel.

Die weiteren Turmringe 21, 22 können nunmehr auf den exakt vertikal auf dem Fundament 5 angeordneten unteren Turmring 20 in an sich bekannter Weise aufgebaut werden. Damit kann der Turm 2 exakt vertikal errichtet und die Windenergieanlage 1 nachfolgend komplettiert werden.

Das Einsetzen der Köcher 6 in die Sauberkeitsschicht 4 zu Beginn der Arbeiten bietet den Vorteil, dass auf diese Weise die Köcher 6 zugleich fest positioniert sind, aber auch gegen Aufschwimmen beim Eingießen des Betons für den Fundamentkörper 5 geschützt sind. Ein Schutz gegen Aufschwimmen kann aber auch erreicht werden dadurch, indem die Köcher 6 mit einem Ballastgewicht 62 versehen werden (siehe Fig. 6).

Optional kann ferner vorgesehen sein, den unteren Turmring 20 mit den an ihm angeordneten Ankerstangen 7 nicht als gesamte Einheit, sondern segmentweise auf den Fundamentkörper 5 zu bringen. Dies ermöglicht eine Vormontage kleinerer Einheiten, was sowohl unter Montage- wie auch unter Transportgesichtspunkten der kleineren Einheiten von Vorteil ist. Diese vormontierten Segmente 20' des Turmrings 20 werden dann einzeln nacheinander auf den Fundamentkörper 5 aufgesetzt, wobei sie mit ihren jeweiligen Ankerstangen 7 gemäß der bereits beschriebenen Weise in die Köcher 6 eintauchen (s. Fig. 9a, b). Sind dann alle Segmente 20' auf dem Fundamentkörper montiert, sodass das untere Turmsegment 20 vollständig gebildet ist, werden dann im nächsten Schritt die Segmente 20' miteinander verbunden und - nach dem Nivellieren - gemeinsam durch Einfüllen des Vergussmörtels 8 in die Köcher 6 fest positioniert.

Alternativ kann aber auch vorgesehen sein, den Schraublochring 3 wie eine Schablone zu verwenden und diesen nach vollzogener Nivellierung zu entfernen. An seiner Stelle wird dann der (formgleiche) Flansch 23 des unteren Turmrings 20 auf die Ankerstangen 7 gesetzt und in der nunmehr vorgegebenen Position fixiert. Dies ist besonders bei sehr großen Turmdurchmessern zweckmäßig, da der Schraublochring 3 deutlich leichter zu handhaben ist als das gesamte untere Turmsegment 20. Besonders zweckmäßig ist es, wenn der Schraublochring 3 in mehrere Bogensegmente 3' unterteilt ist (s. Fig. 10). Diese Bogensegmente 3' können dann einzeln nacheinander montiert werden (s. Fig. 11a, b), ähnlich wie zu Fig. 9a, b beschrieben.

Zur korrekten Ausrichtung der Bogensegmente 3' sind zweckmäßigerweise Radialstangen 31 vorgesehen (s. Fig. 12). Sie sind mit ihrem äußeren Ende 32 an den Bogensegmenten 3' angeordnet und bilden mit ihrem inneren Ende 33 ein gemeinsames Zentrum 34. Somit ist eine exakte Ausrichtung der Bogensegmente 3' auf einem gemeinsamen Kreis sichergestellt. Um einen verrückungssicheren Anschluss von einem Bogensegment 3' zu seinem benachbarten zu erreichen, sind segmentübergreifende Ausrichtplatten 36 vorgesehen.

Ein Beispiel für eine paarweise Anordnung von Ankerstangen 7 in den Köchern 6 ist in Fig. 13 dargestellt. In jedem Köcher 6 sind jeweils zwei Ankerstangen 7 aufgenommen. Es handelt sich hierbei um Ankerstangen 7, die in zwei Reihen entlang des Schraublochrings 3 angeordnet sind. Hierbei sind jeweils die innere und die dazu korrespondierende äußere Ankerstange 7 in einem gemeinsamen Köcher 6 aufgenommen. Die Lage des Schraublochrings 3 ist hierbei durch gestrichelte Linien visualisiert. Man erkennt, dass die Köcher 6 so groß dimensioniert sind, dass trotz des aufgesetzten Schraublochrings 3 noch ein Teilbereich 63 der Köcher 6 nach oben hin offen bleibt. Dieser kann in zweckmäßiger Weise zum Verfüllen mit dem Vergussmörtel 8 verwendet werden. Bei einer beispielhaften Breite des Schraublochrings 3 von 40 cm ergibt sich bei Abmessungen des Köchers von 45cm x 60cm ein Überstand von 10 cm für den Teilbereich 63. Das reicht zum problemfreien Befüllen vollkommen aus.

Ferner dargestellt ist eine optionale Verbindung 64 zwischen benachbarten Köchern 6. Hiermit kann erreicht werden, dass das Befüllen mit dem Vergussmörtel 8 nicht an jedem einzelnen Köcher 6 erfolgen muss, sondern nur an einigen, von denen aus dann über die Verbindung 64 die benachbarten Köcher 6 mit dem Vergussmörtel 8 versorgt werden.

## Patentansprüche

1. Verfahren zum Aufstellen eines Windenergieanlagen-Turms (2) auf einen Fundamentkörper (5), wobei der Windenergieanlagen-Turm (2) mittels Ankerstäben (7) auf einer Oberseite des Fundamentkörpers (5) befestigt wird, **gekennzeichnet durch**
Anordnen mehrerer Köcher (6) an einem Fundament derart, dass die Köcher (6) vertikal ausgerichtet werden, wobei die Köcher (6) Überweite in Bezug auf die Ankerstäbe (7) aufweisen;
Positionieren der Köcher (6) an der Oberseite des zu schaffenden Fundamentkörpers (5) derart, dass sie unterhalb vorgesehener Positionen der Ankerstäbe (7) angeordnet sind;
Herstellen, insbesondere Betonieren, des Fundamentkörpers (5), wobei der Fundamentkörper (5) die Köcher (6) seitlich umschließt und das Innere der Köcher (6) frei bleibt; Befestigen von Ankerstäben (7) mit ihrem einen Ende in den Köchern (6) oder an Aufnahmen (30) eines Schraublochrings (3) für ein unteres Ende des Windenergieanlagen-Turms (2); Positionieren des Schraublochrings (3) über dem Fundamentkörper (5) derart, dass die Köcher (6), die Ankerstäbe (7) und die Aufnahmen (30) des Schraublochrings (3) fluchten; Ablassen des Schraublochrings (3) auf den Fundamentkörper (5), wobei die Ankerstäbe (7) mit ihrem anderen Ende in die Aufnahmen (30) des Schraublochrings (3) oder in die Köcher (6) eintauchen;
Nivellieren des Schraublochrings (3), Vergießen des Spalts zwischen Ankerstäben (7) und Innenwandung (61) der Köcher (6) mit einer Vergussmasse (8), und Montage des unteren Endes des Turms (2).

2. Verfahren nach Anspruch 1, **dadurch gekennzeichnet, dass** die Köcher (6) die Ankerstangen (7) paarweise aufnehmen.

3. Verfahren nach einem der vorangehenden Ansprüche, **dadurch gekennzeichnet, dass** die Köcher gegenüber Aufschwimmen gesichert werden, vorzugsweise durch ein Ballastgewicht (62) und/oder Teilbefüllung des Köchers (6) in seinem unteren Bereich mit einer Vergussmasse (8) und/oder Beton.

4. Verfahren nach einem der vorangehenden Ansprüche, **dadurch gekennzeichnet, dass** als Vergussmasse (8) ein Material verwendet wird, dass eine höhere Festigkeit aufweist als das für den Fundamentkörper (5) verwendete Material, wobei vorzugsweise für die Vergussmasse (8) hochfester Beton verwendet wird.

5. Verfahren nach einem der vorangehenden Ansprüche, **dadurch gekennzeichnet, dass** die Köcher (6) mit einer profilierten Wandung versehen werden.

6. Verfahren nach einem der vorangehenden Ansprüche, **dadurch gekennzeichnet, dass** die Köcher (6) mit einer solchen Weite versehen werden, die wenigstens das Zehnfache, vorzugsweise wenigstens das Zwanzigfache, des Durchmessers der Ankerstäbe (7) beträgt.

7. Verfahren nach einem der vorangehenden Ansprüche, **dadurch gekennzeichnet, dass** die Ankerstäbe (7) mit Eingießplatten (71) versehen werden, vorzugsweise angeordnet an einem unteren Bereich der Ankerstäbe (7).

8. Verfahren nach Anspruch 7, **gekennzeichnet durch** Bemessen der Weite der Köcher (6) derart, dass ihr freier Querschnitt mindestens doppelt so groß ist wie die Fläche der Eingießplatten (71).

9. Verfahren nach einem der vorangehenden Ansprüche, **dadurch gekennzeichnet, dass** die Dimensionierung der Köcher (6) in Radialrichtung mindestens so groß bemessen wird, dass nach Aufsetzen des Schraublochrings (3) ein Teilbereich (63) der Köcher (6) nach oben offen bleibt.

10. Verfahren nach einem der vorangehenden Ansprüche, **dadurch gekennzeichnet, dass** mehrere Köcher (6) mittels einer Verbindung verbunden sind.

11. Verfahren nach Anspruch 10, **dadurch gekennzeichnet, dass** die Verbindung als Rinne ausgeführt wird.

12. Verfahren nach einem der vorangehenden Ansprüche, **dadurch gekennzeichnet, dass** der Schraublochring (3) in mehrere Bogensegmente (3') unterteilt ist, die vorzugsweise mittels Radialstangen und/oder segmentübergreifenden Ausrichtplatten verbunden werden.

13. Verfahren nach einem der vorangehenden Ansprüche, **dadurch gekennzeichnet, dass** als Schraublochring (3) der Flansch (23) eines unteren Turmrings (20) der Windenergieanlage (1) verwendet wird, wobei vorzugsweise der untere Turmring (20) in mehrere Segmente (20') geteilt wird, die einzeln nacheinander auf den Fundamentkörper (5) gesetzt und danach gemeinsam mittels der Ankerstäbe (7) befestigt werden.

14. Windenergieanlage (1) mit einem Turm (2), der an seinem unteren Ende einen Flansch (23) zur Befestigung aufweist, einem Fundament, das einen Fundamentkörper (5) umfasst, einer Mehrzahl von Ankerstäben (7), die in Aufnahmen (30) des Flansches (23) gehaltert sind und mit ihrem unteren Bereich in dem Fundamentkörper (5) verankert sind, wobei der Turm (2) mit seinem Flansch (23) auf dem Fundamentkörper (5) aufsteht,
**dadurch gekennzeichnet, dass**
der Fundamentkörper (5) weiter eine Mehrzahl von Köchern (6) umfasst, die unterhalb des Flansches (23) angeordnet sind und in die die Ankerstäbe (7) eingeschoben sind, wobei in den Köchern (6) eine Vergussmasse (8) angeordnet ist, die einen Spalt zwischen Ankerstab (7) und einer Seitenwandung (61) der Köcher (6) verfüllt.

15. Windenergieanlage nach Anspruch 14, **dadurch gekennzeichnet, dass** am unteren Ende des Turmes (2) ein Schraublochring (3) mit Aufnahmen (30) zur Befestigung der Ankerstäbe (7) mit ihrem einen Ende angeordnet ist, und/oder
der Schraublochring (3) in mehrere Bogensegmente (3') unterteilt ist, und/oder
der Schraublochring (3) der Flansch (23) des unteren Turmrings (20) der Windenergieanlage (1) ist, und/oder die Ankerstäbe (7) mit Eingießplatten (71) versehen sind, und/oder
die Köcher (6) die Ankerstangen (7) paarweise aufnehmen, und/oder
die Köcher (6) gegenüber Aufschwimmen gesichert sind, und/oder
die Köcher (6) mit einer profilierten Wandung versehen sind, und/oder
die Köcher (6) eine Weite aufweisen, die wenigstens das Zehnfache des Durchmessers der Ankerstäbe beträgt, und/oder
die Weite der Köcher (6) derart bemessen ist, dass ihr freier Querschnitt mindestens doppelt so groß ist wie die Fläche der Eingießplatten (71), und/oder
die Dimensionierung der Köcher (6) in Radialrichtung mindestens so groß bemessen ist, dass nach Aufsetzen des Schraublochrings (3) ein Teilbereich (63) der Köcher (6) nach oben offen bleibt, und/oder
mehrere Köcher (6) mittels einer Verbindung verbunden sind, und/oder die Verbindung als Rinne ausgeführt ist, und/oder
als Vergussmasse (8) ein Material verwendet wird, dass eine höhere Festigkeit aufweist als das für den Fundamentkörper (5) verwendete Material.

## Claims

1. Method for erecting a wind turbine tower (2) on a foundation body (5), the wind turbine tower (2) being secured to an upper side of the foundation body (5) by means of anchor rods (7), **characterized by**
arranging multiple sleeves (6) on a foundation such that the sleeves (6) are oriented vertically, the sleeves (6) being wider than the anchor rods (7);
positioning the sleeves (6) on the upper side of the foundation body (5) that is to be created in such a manner that they are arranged below the intended positions of the anchor rods (7);
creating the foundation body (5), in particular using concrete, with the foundation body (5) surrounding the sides of the sleeves (6) and the interior of the sleeves (6) remaining free;
securing anchor rods (7) with one end thereof in the sleeves (6) or in receptacles (30) of a screw hole ring (3) for a lower end of the wind turbine tower (2);
positioning the screw hole ring (3) over the foundation body (5) in such a manner that the sleeves (6), the anchor rods (7) and the receptacles (30) of the screw hole ring (3) are all aligned;
lowering the screw hole ring (3) onto the foundation body (5), with the other end of the anchor rods (7) entering into the receptacles (30) of the screw hole ring (3) or into the sleeves (6);
levelling the screw hole ring (3), pouring a casting compound (8) into the gap between the anchor rods (7) and the internal wall (61) of the sleeves (6), and mounting the lower end of the tower (2).

2. Method according to Claim 1, **characterized in that** the sleeves (6) receive the anchor rods (7) in pairs.

3. Method according to either of the preceding claims, **characterized in that** the sleeves are prevented from floating, preferably by means of a ballast weight (62) and/or partial filling of the lower portion of the sleeve (6) using a casting compound (8) and/or concrete.

4. Method according to one of the preceding claims, **characterized in that** the casting compound (8) used is a material having higher strength than the material used for the foundation body (5), high-strength concrete being preferably used for the casting compound (8).

5. Method according to one of the preceding claims, **characterized in that** the sleeves are provided with a profiled wall.

6. Method according to one of the preceding claims, **characterized in that** the width of the sleeves (6) is chosen to be at least ten times, preferably at least twenty times the diameter of the anchor rods (7).

7. Method according to one of the preceding claims, **characterized in that** the anchor rods (7) are provided with casting plates (71) preferably arranged in a lower region of the anchor rods (7).

8. Method according to Claim 7, **characterized by** determining the width of the sleeves (6) such that their free cross-sectional area is at least twice as large as the area of the casting plates (71).

9. Method according to one of the preceding claims, **characterized in that** the dimensioning of the sleeves (6) in the radial direction is determined to be at least large enough that after placement of the screw hole ring (3) a part region (63) of the sleeves (6) remains open at the top.

10. Method according to one of the preceding claims, **characterized in that** multiple sleeves (6) are connected by means of a connection.

11. Method according to Claim 10, **characterized in that** the connection is embodied as a channel.

12. Method according to one of the preceding claims, **characterized in that** the screw hole ring (3) is divided into multiple arc segments (3') which are preferably connected by means of radial rods and/or segment-encompassing orienting plates.

13. Method according to one of the preceding claims, **characterized in that** the flange (23) of a lower tower ring (20) of the wind turbine (1) is used as the screw hole ring (3), with the lower tower ring (20) preferably being divided into multiple segments (20') which are individually and sequentially placed on the foundation body (5) and then together secured by means of the anchor rods (7).

14. Wind turbine (1) having a tower (2) that has at its lower end a flange (23) for securing, a foundation that comprises a foundation body (5), a multiplicity of anchor rods (7) which are retained in receptacles (30) of the flange (23) and which are anchored with their lower region in the foundation body (5), wherein the tower (2) stands with its flange (23) on the foundation body (5),
**characterized in that**
the foundation body (5) further comprises a multiplicity of sleeves (6) which are arranged below the flange (23) and into which the anchor rods (7) are inserted, there being arranged in the sleeves (6) a casting compound (8) which fills a gap between the anchor rods (7) and a side wall (61) of the sleeves (6).

15. Wind turbine according to Claim 14, **characterized in that** at the lower end of the tower (2) there is arranged a screw hole ring (3) with receptacles (30) for securing one end of the anchor rods (7), and/or
the screw hole ring (3) is divided into multiple arc segments (3'), and/or
the screw hole ring (3) is the flange (23) of the lower tower ring (20) of the wind turbine plant (1), and/or
the anchor rods (7) are provided with casting plates (71), and/or
the sleeves (6) receive the anchor rods (7) in pairs, and/or
the sleeves (6) are prevented from floating, and/or
the sleeves (6) are provided with a profiled wall, and/or the width of the sleeves (6) is chosen to be at least ten times the diameter of the anchor rods, and/or
the width of the sleeves (6) is determined such that their free cross-sectional area is at least twice as large as the area of the casting plates (71), and/or
the dimensioning of the sleeves (6) in the radial direction is determined to be at least large enough that after placement of the screw hole ring (3) a part region (63) of the sleeves (6) remains open at the top, and/or
multiple sleeves (6) are connected by means of a connection, and/or the connection is embodied as a channel, and/or
the casting compound (8) used is a material having higher strength than the material used for the foundation body (5) .

## Revendications

1. Procédé d'installation d'une tour d'aérogénérateur (2) sur un corps de fondation (5), la tour d'aérogénérateur (2) étant fixée au moyen de barres d'ancrage (7) sur un côté supérieur du corps de fondation (5), **caractérisé par** arrangement de plusieurs carquois (6) au niveau d'une fondation de telle sorte que les carquois (6) sont orientés verticalement, les carquois (6) possédant une surlargeur par rapport à la barre d'ancrage (7) ;
positionnement des carquois (6) sur le côté supérieur du corps de fondation (5) à produire de telle sorte qu'ils sont disposés au-dessous des positions prévues des barres d'ancrage (7) ;
fabrication, notamment bétonnage, du corps de fondation (5), le corps de fondation (5) entourant latéralement les carquois (6) et l'intérieur des carquois (6) restant libre ;
fixation de barres d'ancrage (7) avec l'une de leurs extrémités dans les carquois (6) ou au niveau de logements (30) d'un anneau de trous de vis (3) pour une extrémité inférieure de la tour d'aérogénérateur (2) ;
positionnement de l'anneau de trous de vis (3) au-dessus du corps de fondation (5) de telle sorte que les carquois (6), les barres d'ancrage (7) et les logements (30) de l'anneau de trous de vis (3) soient alignés ;
abaissement de l'anneau de trous de vis (3) sur le corps de fondation (5), les barres d'ancrage (7) pénétrant avec leur autre extrémité dans les logements (30) de l'anneau de trous de vis (3) ou dans les carquois (6) ;
mise à niveau de l'anneau de trous de vis (3), scellement de l'interstice entre les barres d'ancrage (7) et la paroi interne (61) des carquois (6) avec une masse de scellement (8) et montage de l'extrémité inférieure de la tour d'aérogénérateur (2).

2. Procédé selon la revendication 1, **caractérisé en ce que** les carquois (6) accueillent les barres d'ancrage (7) par paires.

3. Procédé selon l'une des revendications précédentes, **caractérisé en ce que** les carquois sont calés pour les empêcher de flotter, de préférence par un poids de lestage (62) et/ou un remplissage partiel du carquois (6) dans sa zone inférieure avec une masse de scellement (8) et/ou du béton.

4. Procédé selon l'une des revendications précédentes, **caractérisé en ce que** la masse de scellement (8) utilisée est un matériau qui possède une solidité supérieure à celle du matériau utilisé pour le corps de fondation (5), du béton à haute résistance étant de préférence utilisé pour la masse de scellement (8).

5. Procédé selon l'une des revendications précédentes, **caractérisé en ce que** les carquois (6) sont pourvus d'une paroi profilée.

6. Procédé selon l'une des revendications précédentes, **caractérisé en ce que** les carquois (6) sont pourvus d'une largeur qui est au moins égale à dix fois, de préférence au moins vingt fois le diamètre des barres d'ancrage (7).

7. Procédé selon l'une des revendications précédentes, **caractérisé en ce que** les barres d'ancrage (7) sont pourvues de plaques de scellement (71), de préférence disposées au niveau d'une zone inférieure des barres d'ancrage (7).

8. Procédé selon la revendication 7, **caractérisé par** un dimensionnement de la largeur des carquois (6) de telle sorte que leur section transversale libre est au moins égale au double de la surface des plaques de scellement (71).

9. Procédé selon l'une des revendications précédentes, **caractérisé en ce que** la taille des carquois (6) dans la direction radiale est dimensionnée au moins suffisamment grande pour qu'une zone partielle (63) des carquois (6) vers le haut reste ouverte après la dépose de l'anneau de trous de vis (3).

10. Procédé selon l'une des revendications précédentes, **caractérisé en ce que** plusieurs carquois (6) sont reliés au moyen d'une liaison.

11. Procédé selon la revendication 10, **caractérisé en ce que** la liaison est réalisée sous la forme d'une goulotte.

12. Procédé selon l'une des revendications précédentes, **caractérisé en ce que** l'anneau de trous de vis (3) est subdivisé en plusieurs segments de sol (3') qui sont de préférence reliés au moyen de barres radiales et/ou de plaques d'alignement recouvrant l'ensemble des segments.

13. Procédé selon l'une des revendications précédentes, **caractérisé en ce que** la bride (23) d'un anneau de tour inférieur (20) de l'aérogénérateur (1) est utilisée en tant qu'anneau de trous de vis (3), l'anneau de tour inférieur (20) étant de préférence divisé en plusieurs segments (20') qui sont posés individuellement les uns après les autres sur le corps de fondation (5) et ensuite fixés en commun au moyen des barres d'ancrage (7).

14. Aérogénérateur (1) comprenant une tour (2) qui possède, à son extrémité inférieure, une bride (23) servant à la fixation, une fondation qui comporte un corps de fondation (5), une pluralité de barres d'ancrage (7) qui sont maintenues dans des logements (30) de la bride (23) et qui sont ancrées dans le corps de fondation (5) par leur zone inférieure, la tour (2) reposant sur le corps de fondation (5) avec sa bride (23),
**caractérisé en ce que**
le corps de fondation (5) comporte en outre une pluralité de carquois (6) qui sont disposés au-dessous de la bride (23) et dans lesquels sont insérées les tiges d'ancrage (7), une masse de scellement (8) étant disposée dans les carquois (6), laquelle remplit un interstice entre la barre d'ancrage (7) et une paroi latérale (61) du carquois (6).

15. Aérogénérateur selon la revendication 14, **caractérisé en ce qu'**un anneau de trous de vis (3) comprenant des logements (30) servant à la fixation des barres d'ancrage (7) par l'une de leurs extrémités est disposé au niveau de l'extrémité inférieure de la tour (2) et/ou
l'anneau de trous de vis (3) est subdivisé en plusieurs segments de sol (3') et/ou
l'anneau de trous de vis (3) est la bride (23) de l'anneau de tour inférieur (20) de l'aérogénérateur (1) et/ou les barres d'ancrage (7) sont pourvues de plaques de scellement (71) et/ou
les carquois (6) accueillent les barres d'ancrage (7) par paires et/ou
les carquois (6) sont calés pour les empêcher de flotter et/ou les carquois (6) sont pourvus d'une paroi profilée et/ou les carquois (6) possèdent une largeur qui est au moins égale à dix fois le diamètre des barres d'ancrage et/ou la largeur des carquois (6) est dimensionnée de telle sorte que leur section transversale libre est au moins égale au double de la surface des plaques de scellement (71) et/ou la taille des carquois (6) dans la direction radiale est dimensionnée au moins suffisamment grande pour qu'une zone partielle (63) des carquois (6) vers le haut reste ouverte après la dépose de l'anneau de trous de vis (3) et/ou plusieurs carquois (6) sont reliés au moyen d'une liaison et/ou la liaison est réalisée sous la forme d'une goulotte et/ou
la masse de scellement (8) utilisée est un matériau qui possède une solidité supérieure à celle du matériau utilisé pour le corps de fondation (5).
